# EUROPEAN PATENT APPLICATION

(11) **EP 0 880 287 A1**
(43) Date of publication of application: **25.11.1998**
(21) Application number: 97201537.4
(22) Date of filing: 23.05.1997
(51) Int. Cl.: H04N 9/31

(54) **LCD-projector**

(71) Applicant: BARCO N.V., 8970 Poperinge (BE)
(72) Inventor: Van den Bossche, Bart, 8501 Bissegem (BE); Verbiest, Rik Suzanne Maurits, 9900 Eeklo (BE)

(57) **Abstract**

LCD-projector, more particularly an LCD-projector (1) which is provided with two or more LCD-panels (2-3-4), having adjustment means (22-23-24) for one or more of said LCD-panels (2-3-4), characterized in that the adjustment means (22-23-24) of one or more of said LCD-panels (2-3-4) are, at least partially, motorized. Further special adjustment means are provided allowing an easy adjustment.

## Description

This invention relates to an LCD-projector, more particularly to a multi-panel LCD-projector (Liquid Cristal Display Projector).

More particularly the invention provides in a system for adjusting in an LCD-projector, on one hand, the focus of the projected images of the respective LCD-panels, and on the other hand the mutual positions of these projected images.

According to the known systems, the adjustment is very complex and difficult to be carried out. As a consequence these known systems show the disadvantage that the adjustment is time consuming.

The object of the invention is to provide an LCD-projector having adjustment means allowing to carry out the adjustments in an easier manner.

To this end, in first instance, the invention relates to an LCD-projector, more particularly an LCD-projector which is provided with two or more LCD-panels, having adjustment means for one or more of said LCD-panels, characterized in that the adjustment means of one or more of said LCD-panels are, at least partially, motorized.

The fact that the adjustment means are motorized offers the advantage that the adjustment can be done from a distance, e.g. by means of a remote control. In this way the person carrying out the adjustment can take place near the projection screen and can clearly follow up the adjustment during the actuation of the remote control.

By motorizing the adjustment means, the adjustment can also be done very quickly. Moreover several adjustments can be done simultaneously so that time can be saved. Furthermore the motorisation allows a complete automation.

The fact that the adjustment means are motorized also offers the advantage that the adjustment of the images from two projectors, which are projected onto each other in order to obtain a bright image, can be carried out very easy.

In the most preferred embodiment all adjustment means of each of said LCD-panels are motorized.

The invention also relates to an LCD-projector which is provided with adjustment means which are very apt for use in a motorized system, which, however, are also advantageous in non-motorized systems or in partially motorized systems. According to the invention these adjustment means comprise, on the one hand, adjustment means for the focal and/or magnification adjustment of the projected image and, on the other hand, adjustment means allowing to adjust the mutual position of the images from the respective LCD-panels independently of the focal and/or magnification adjustment.

Due to the fact that the adjustment of the position can now be done independently from the focal and/or magnification adjustment, the adjustment is considerably simplified with respect to the known systems.

Further the invention also relates to an LCD-projector having adjustment means which comprise first adjustment means allowing to adjust and locate the respective LCD-panel in a predetermined plane, as well as second adjustment means allowing to displace said LCD-panel within said plane, independently from the adjustment done by the first adjustment means.

Due to the fact that the second adjustment means only allow to displace the LCD-panel in the plane which first is determined by the first adjustment means, the adjustment can be carried out in a relatively easy manner.

In the most preferred embodiment the adjustment means for the focal and/or magnification adjustment of the projected image are formed by the first adjustment means and the adjustment means allowing to adjust the mutual position of the images from the respective LCD-panels are formed by the second adjustment means.

Due to the fact that, according to the invention, by using first and second adjustment means, the degrees of freedom are divided in two groups, the adjustment is simplified. The simplification of the adjustment offers the advantage that in an automated system the software for the adjustment can be kept relatively simple.

In order to better show the characteristics of the invention, hereafter, as examples without any limitative character, some preferred embodiments of the invention are described, with reference to the accompanying drawings, in which :
figure 1 shows an LCD-projector provided with adjustment means according to the invention;
figure 2 schematically shows a cross section according to line II-II in figure 1;
figure 3 shows more in detail the adjustment means which in figure 2 are indicated by F3;
figure 4 shows a cross-section according to line IV-IV in figure 3;
figure 5 shows a view according to arrow F5 in figure 3;
figure 6 shows an embodiment of the regulation element which in figure 3 is schematically represented and indicated by F6;
figure 7 shows the element from figure 6 in an exploded view;
figure 8 and figure 9 show portions indicated by F8 and F9 in figure 6;
figure 10 shows a pratical embodiment of the adjustment means used in the LCD-projector of the invention;
figures 11 and 12 show two parts of the device of figure 10;
figure 13 shows at an enlarged scale a cross section according to line XIII-XIII in figure 10;
figure 14 shows a variant of the part shown in figure 6.

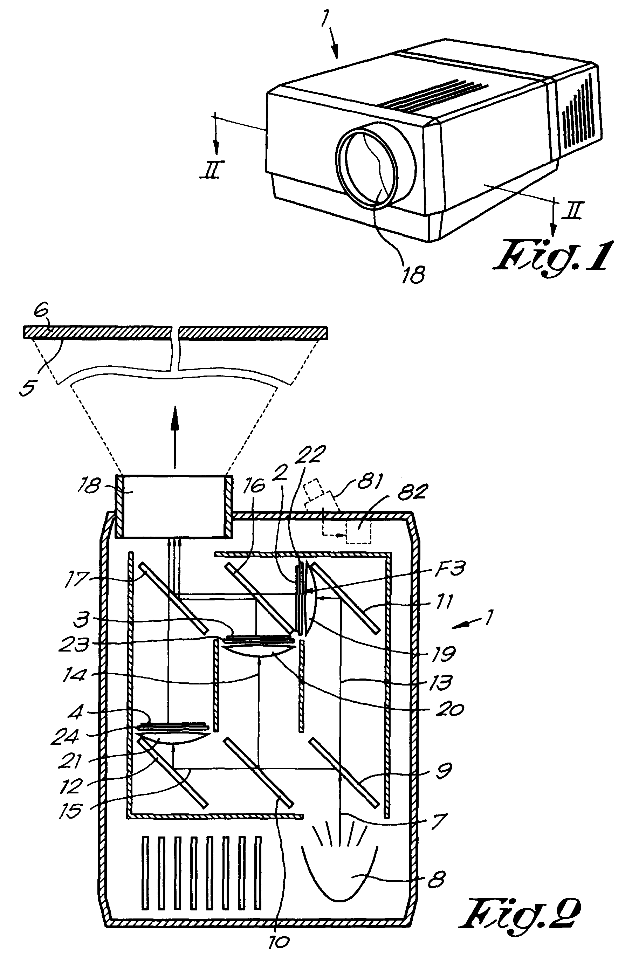

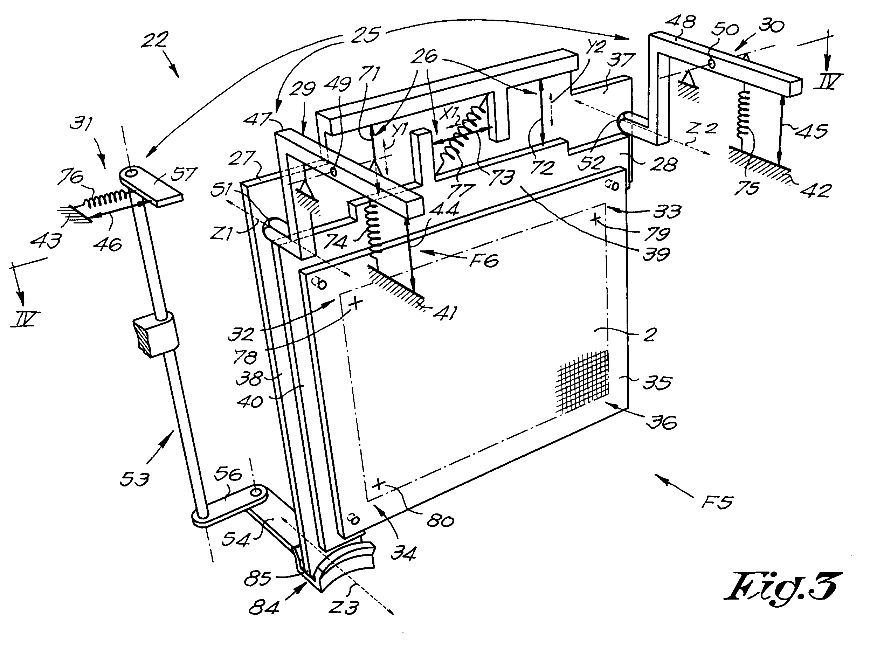

As shown in figures 1 and 2, the present invention relates to a multi-panel LCD-projector 1.

Such LCD-projector 1 is provided with several LCD-panels, in this case three LCD-panels, 2-3-4 respectively, each allowing to project light of a well-defined colour, such that by the combination of several colours all colours can be created in the image 5 which is projected on a screen 6.

As is well known in the art such LCD-panel is divided in a number of grids by means of electrical conductors, such that by providing specific tensions onto the conductors, each of the grid openings can be made light-transmitting or not, or can be made only partially light-transmitting.

The steering of the LCD-panels is done by appropriate electronics and software, not shown in the drawings.

Normally, as shown in figure 2, a bundle of white light 7 is created by means of a projection lamp 8. By means of optical elements, such as semi-permeable mirrors 9-10 and mirrors 11-12, three bundles of light 13-14-15 of different colour, blue, green and red respectively, are projected onto the rear sides of the LCD-panels 2-3-4.

Dependent on the actuation of the LCD-panels 2-3-4, three images are brought together via semi-permeable mirrors 16-17 and are projected onto the screen 6 by means of an objective 18. By overlapping the different colours it is possible to create all colours on the screen 6.

It is clear that additional optical elements may be provided in the paths of the bundles of light 13-14-15, such as objectives 19-20-21.

Before projecting, the convergency of the images created by each of the LCD-panels 2-3-4 is to be adjusted in order to form together a clear common image 5. This means that a focal adjustment and/or magnification adjustment, as well as an adjustment of the mutual position of the images from the respective LCD-panels has to be carried out. To this end the LCD-projector 1 is provided with adjustment means for positioning the LCD-panels. Preferably each of the LCD-panels 2-3-4 is provided with such adjustment means, the latter being indicated schematically in figure 2 by means of reference numerals 22-23-24.

According to a first inventive feature of the present invention, the LCD-projector 1 is provided with adjustment means 22-23-24 for positioning the LCD-panels 2-3-4, whereby one or more said adjustment means 22-23-24 are, at least partially, motorized. The motorisation can be realized in many manners. A specific embodiment thereof will be described further on.

The invention also relates to a particular construction of the adjustment means 22-23-24 which are very apt for use in such motorized system. Hereafter in the description and drawings reference is made to the adjustment means 22, although it is clear that the adjustment means 23-24 may be constructed in a similar manner.

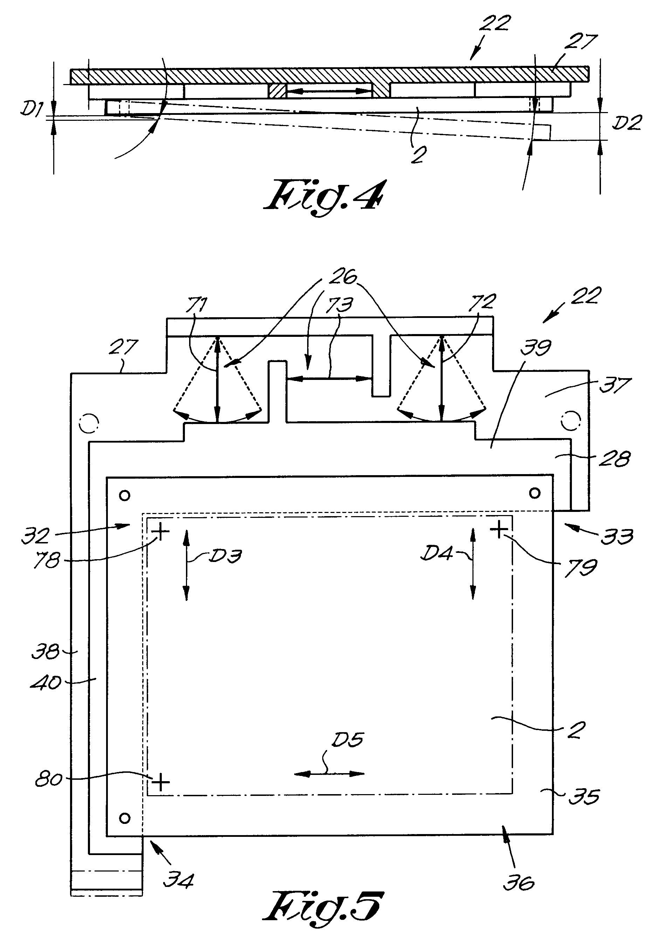

As shown in the figures 3 to 5 the adjustment means 22 comprise, on the one hand, first adjustment means 25 allowing to adjust and locate the respective LCD-panel 2 in a predetermined plane, as well as second adjustment means 26 allowing to displace said LCD-panel 2 within said plane, independently of the adjustment done by the first adjustment means 25. Hereby the first adjustment means 25 allow the focal and/or magnification adjustment of the projected image of the LCD-panel 2, while the second adjustment means 26 allow to adjust the position of the image onto the screen 6, so that the mutual position of the images of the respective LCD-panels 2-3-4 can be adjusted to exactly overlap each other.

The first adjustment means 25 consist of a support 27 along which the respective LCD-panel 2, in this case a frame 28 on which the LCD-panel 2 is mounted, can be shifted in a plane determined by said support 27, as well as of three adjusting devices 29-30-31, cooperating with said support 27 at or nearby the locations of three corners 32-33-34 of the LCD-panel 2, said adjusting devices 29-30-31 allowing displacements Z1-Z2-Z3 of the LCD-panel 2 at said corners, substantially perpendicular to the plane of the LCD-panel 2.

Preferably, as shown in figure 3, the adjusting devices 29-30-31 cooperate with respective locations at the support 27 which correspond to the two upper corners 32-33 and one lower corner 34 of the LCD-panel 2.

The LCD-panel 2, more particularly its framing 35, is attached to the frame 28 only at the location of the three corners 32-33-34, this in order to avoid distortion and cracking of the LCD-panel 2. As the fourth corner 36 of the LCD-panel 2 is not supported, as shown in figure 3, the support 27, as well as the frame 28 can be constructed in the shape of a L, the support 27 showing two legs 37-38 which are perpendicular to each other and the frame 28 showing two legs 39-40 which also are perpendicular to each other.

The adjusting devices 29-30-31 may be of various nature, although in the preferred embodiments they will always consist of couplings provided between supporting parts 41-42-43 and the portions of the support 27 to be adjusted, whereby these couplings are provided with regulation elements 44-45-46 which are variable in length, which in figure 3 are schematically represented by arrows.

According to figure 3 the adjusting devices 29-30 are provided with levers 47-48 pivoting around pivoting points 49-50. One end of each of these levers 47-48 is coupled to the support 27, e.g. by means of a universal joint, 51-52 respectively. The other ends of these levers 47-48 cooperate with the regulation elements 44-45 respectively, such that a variation in the length of the regulation elements 44-45 results in a displacement Z1 and/or Z2, generally horizontal.

The adjustment device 31 which cooperates with the lower corner 34 is provided with a transmission structure 53 allowing to carry out the adjustment on top of the LCD-projector 1. This transmission structure 53 consists of a shiftable element 54 which can cooperate with the lower end of the leg 38, and a pivotable structure formed by a shaft 55 and levers 56-57, the first lever 56 being coupled to the element 54, and the second lever 57 being displacable by means of the regulation element 46.

The regulation elements 44-45-46 may be of different nature, although they preferably consist of endless screws, thread rods or the like, these screws or rods being mounted in such a manner that the rotation thereof, or the rotation of the parts which cooperate with these screws in one rotational direction, allows a lengthening, whilst the rotation thereof in the reverse rotational direction allows a shortening.

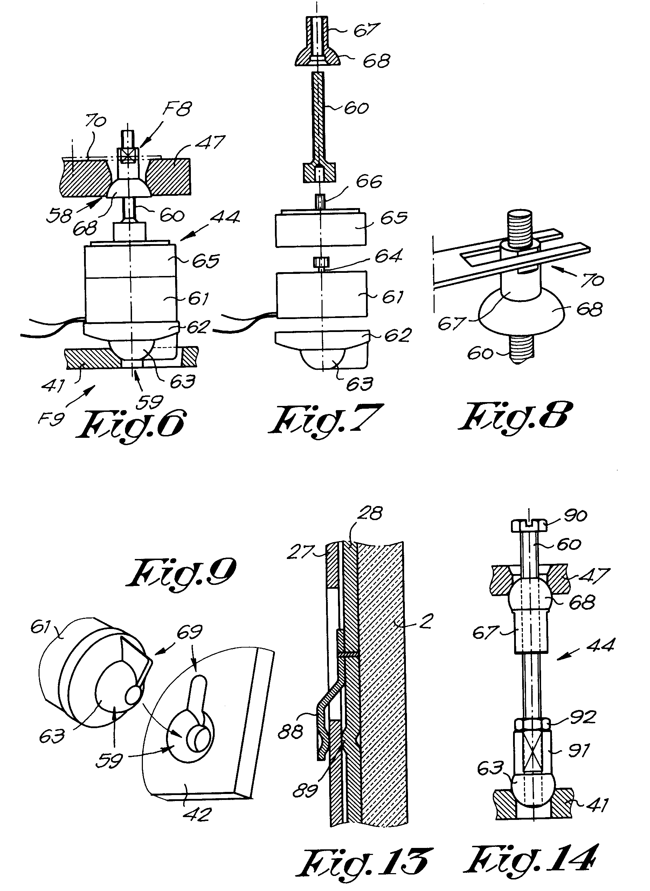

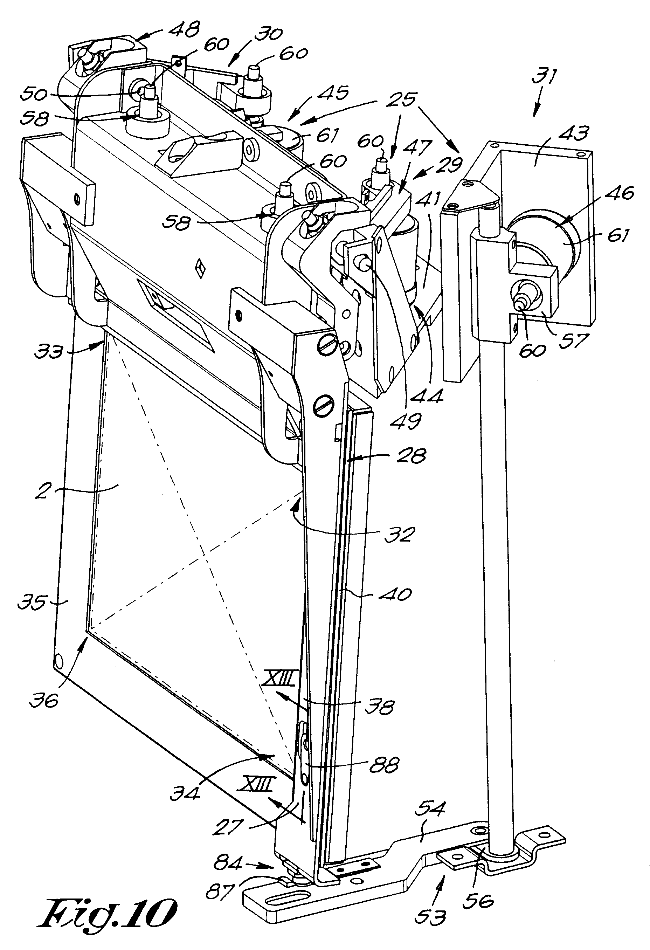

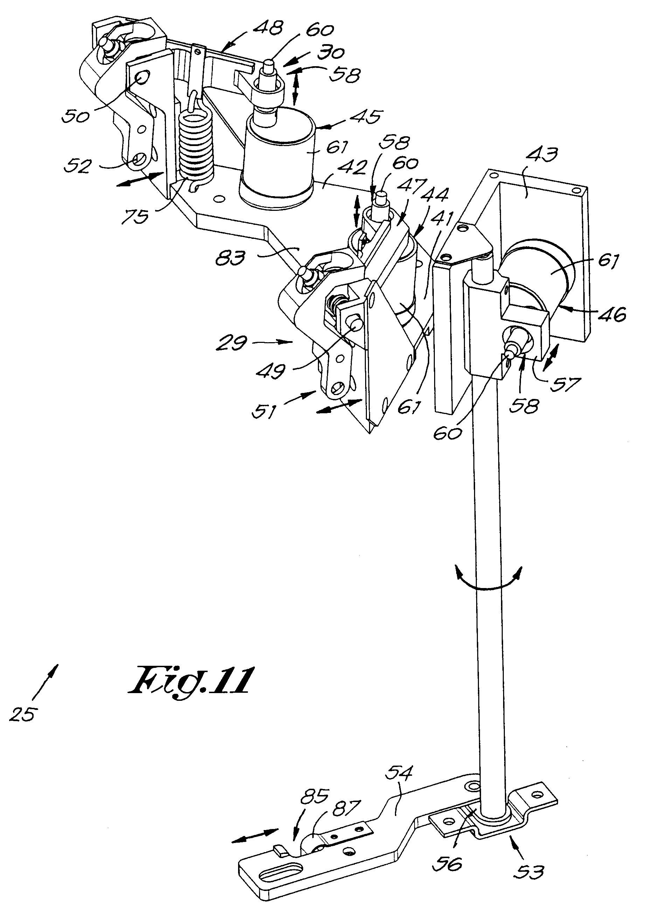

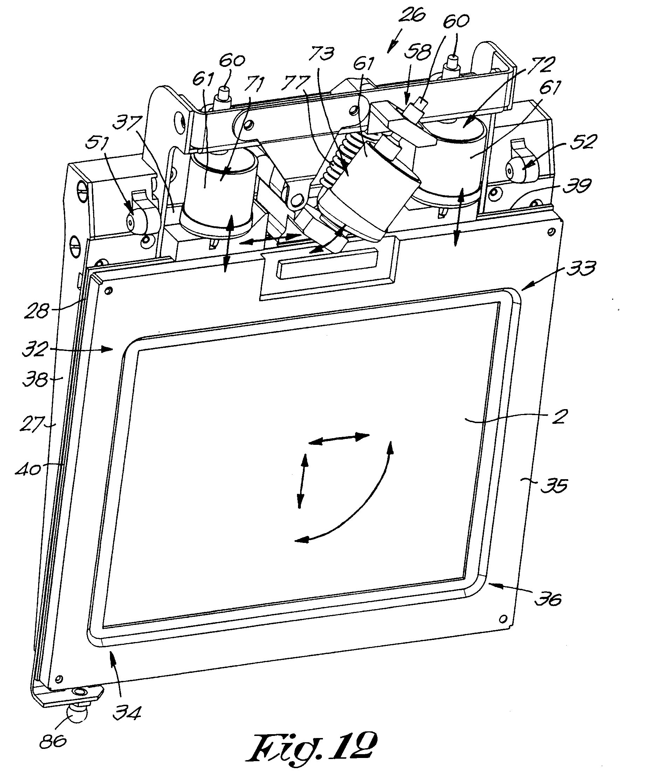

In the case that the adjustment means 25 are motorized, the regulation elements 44-45-46 may be of a construction as shown in figures 6 to 9.

Hereafter, by means of figures 6 to 9 only the element 44 is described. The elements 45-46, however, are identical.

The regulation element 44 consists of a construction which by means of universal joints 58-59 is mounted between, in this case, the lever 47 and the supporting part 41. Further the regulation element 44 substantially consists of a thread rod 60 and a motor 61, mounted in such a manner between the universal joints 58-59 that the rotational movement delivered by the motor 61 in the one or the other direction respectively results in a shortening or a lengthening of the distance between the joints 58-59.

It is clear that the universal joints 58-59 also may be replaced by other kinds of couplings, e.g. joints which allow a rotation in at least one plane.

Hereby, the motor 60 is mounted on a cap 62 provided with the ball portion 63 of the universal joint 59. On the outgoing shaft 64 of the motor 61 a reduction gearing 65 is mounted, the outgoing shaft 66 of this reduction gearing 65 being coupled to the thread rod 60. This thread rod 60 cooperates with a nut 67 which is provided with the ball portion 68 of the universal joint 58.

It is clear that the driving movement of the motor 61 results in the rotation of the rod 60, which in its turn results in the translation of the nut 67 along the rod 60.

Normally, due to friction neither the ball portion 63, nor the ball portion 68 will rotate during the driving motion of the motor 61. However, in order to completely exclude rotation of the portions 63 and 68, locking means 69-70 may be provided, as shown in figures 8 and 9.

The second adjustment means 26 consist of three adjusting devices 71-72-73, namely two adjusting devices 71-72 allowing to shift the LCD-panel 2 at two corners 32-33 substantially in the same direction, indicated by Y1 and Y2 respectively, and a third adjustment device 73 allowing to shift the LCD-panel 2 in a direction X1 which is, or substantially is, perpendicular to the directions Y1 and Y2 of the movement obtained by the first two adjusting devices 71-72.

More particularly, in the represented embodiment, the said two adjusting devices 71-72 allow to shift the LCD-panel 2 up and down at its two upper corners 32-33, while the said third adjustment device 73 allows to shift the LCD-panel 2 in a sideward direction.

The adjusting devices 71-72-73 are mounted between the support 27 and the frame 28 in the manner as shown in figure 3. In pratice these devices 71-72-73 will consist of regulation elements having a construction similar to the one shown in figure 6.

The adjusting devices 29-30-31 are kept together by means of biasing means, such as tensioning springs 74-75-76.

The adjusting devices 71-72-73 are also kept together by means of biasing means, which in this case are formed by a common spring 77 which is mounted between the support 27 and the frame 28 in the way as shown in figure 3.

These biasing means also exclude the existance of play in the said adjusting devices.

The LCD-projector 1 may be provided with a remote control, not shown in the drawings, for adjusting one or more of the adjustment means 25-26. The remote control may be connected to the LCD-projector 1 by means of a cable, although preferably the connection will be wireless. The remote control is provided with a control panel from which it is possible to actuate each motor 61 of the respective adjusting devices 29-30-31-71-72-73.

Of course, according to an alternative, the control panel may also be provided at the LCD-projector 1 itself, whether combined with a remote control or not.

The functioning of the adjustment means 25-26 can be deduced from the drawings, especially from figures 3 to 5.

During adjustment a test image is generated at the LCD-panels, e.g. in the form of marks, such as crosses 78-79-80 near the corners 32-33-34.

First, a focal adjustment can be carried out by means of the adjusting devices 29-30-31, wereby the support 27, together with the frame 28 which is located against the support 27, is displaced at its respective corners until the projected images of each of the marks 78-79-80 are focused. Hereby it has to be noted that the adjustment by means of one of the adjusting devices 29-30-31 has practically no influence on the adjustment of the other of these devices, offering the advantage that the adjustments can be done one by one.

The fact that the adjustment at one of the devices 29-30-31 has only few influence on the adjustment of the other of these devices, is shown in figure 4. As indicated a displacement D2 at the cross 79 only results in a very small displacement D1 at the location of the cross 78.

The focal and/or magnification adjustment can be carried out for each LCD-panel 2-3-4 separately.

Normally, first, the image of one of the LCD-panels is adjusted by means of the objective 18. Subsequently the focus and/or magnification of the images of the other LCD-panels are adjusted in function of the first image.

Secondly the position of the images generated by each of the LCD-panels 2-3-4 is adjusted by means of the adjustment means 26. By these adjustment means 26 the LCD-panels 2-3-4 can be shifted up and down, as well as sidewards and can be rotated in their plane. In this way the images can be adjusted so that they exactly overlap each other, in other words that the images of each of the three colours are not offset in respect to each other.

As shown in figure 5, during the adjustment of the position, movements at the adjusting devices 71-72-73 results in displacements D3, D4 and D5 respectively.

According to a variant the LCD-projector 1 may be provided with adjustment means which are automated. In a preferred embodiment of this variant, as indicated in figure 2 in dashed lines, the LCD-projector 1 will be provided with a camera 81 for observing the image 5 projected by the LCD-projector 1, for example a test image, as well as with means, such as an electronic control unit 82, for controling the adjustment means 25-26 in function of the image observed by the camera 81, in such a manner that the focussing and/or the magnification adjustment and/or the positioning are done automatically.

Figures 10 to 12 show a practical embodiment of the adjustment means 25-26 of one of the LCD-panels, in this case of the LCD-panel 2. Figure 10 shows the adjustment means 25 and 26 mounted together. Figure 11 shows the adjustment means 25 for focussing and/or magnification, while figure 12 shows the adjustment means 26 for the positioning.

The construction of this practical embodiment corresponds to the construction of the schematically shown embodiment from figure 3. Corresponding parts are indicated with the same reference numerals.

Some additional particularities of the embodiment of figures 10 to 12 are described hereafter.

As can be seen in figure 10, the first adjustment means 25, at least the upper second adjustment means 26 and the LCD-panel, in this case the panel 2, form a dismountable unit, which by means of a mounting plate 83 can be mounted onto the frame of the LCD-projector. In this way such unit can easily be slid out of the LCD-projector 1, for example in order to carry out repairs or to clean or replace the LCD-panel 2.

In order to obtain that the unit can easily be disconnected from the transmission structure 53, a coupling 84 is provided, allowing that the unit is automatically coupled to transmission structure 53 upon placing it in the LCD-projector 1. As shown in the figures 10-11-12, this coupling 84 consists of a seat 85 receiving the lower end of the support 27. In order to allow movement during adjustment, as well as to avoid play, the coupling is preferably formed by means of a ball portion 86 cooperating with an elastic clamp 87 forming the seat 85.

As can be seen in figure 12 the second adjustment means 26 are mounted onto the support 27 which is adjustable by the first adjustment means 25.

As shown in figures 10 and 13, the device for adjusting the LCD-panel 2 may also be provided with elastic tensioning means to permanently force the LCD-panel, more particularly its framing 35, in contact with the support 27, such as a spring leaf 88. Preferably such tensioning means will be provided near each of the corners 32-33-34.

As shown in figure 13, in order to reduce friction the contact between the support 27 and the frame 28 may be limited to local contact points 89. These contact points 89 are preferably located opposite to the pressure surfaces of the spring leafs 88.

As mentioned in the introduction, the adjustment means 25-26 according to the invention are also advantageous when they are not motorized. Consequently the present invention also relates to embodiments in which one or more of the adjustment means 25-26, more particulary one or more of the devices 29-30-31-71-72-73, are replaced by manually adjustable devices, such as adjustment screws. An example hereof is illustrated in figure 14, which in fact corresponds with the embodiment of figure 6, with the difference that the motor 60 is removed and the rotation of the thread rod 60 has to be done manually. To this end the thread rod 60 is prolongated at its upper end and is provided with a head 90, allowing to turn the rod 60 by means of a tool, such as a screw driver.

The cap 62 is replaced by a nut 91 which is fixed onto the rod 60 by means of a locking nut 92. The rotation of the head 90 results in the screwing in or screwing out of the rod 60 in the nut 67.

It is clear that the adjustment means 25-26 need not be provided at each of the LCD-panels 2-3-4. For example one panel can be provided in a fixed manner. The focussing of the image of this panel can be done by the adjustment of the objective 18 and/or by positioning the LCD-projector 1, while afterwards the adjustment of other two LCD-panels is done in respect to the image obtained by the first LCD-panel.

Although the invention in first instance is intended to be used in multi-colour projectors, it can also be used in other applications, for example in a mono-colour LCD-projector using a plurality of LCD-panels, each of said panels generating an identical image, whereby each panel is lit with its own projection lamp, this in order to increase the brightness of the image projected on the screen 6.

The present invention is in no way limited to the embodiments described above and represented in the drawings, but, such LCD-projector, and more particularly the adjustment means for the LCD-panels used in this LCD-projector may be realized in various forms without leaving the scope of the claimed invention.

## Claims

1. LCD-projector, more particularly an LCD-projector (1) which is provided with two or more LCD-panels (2-3-4), having adjustment means (22-23-24) for one or more of said LCD-panels (2-3-4), characterized in that the adjustment means (22-23-24) of one or more of said LCD-panels (2-3-4) are, at least partially, motorized.

2. LCD-projector according to claim 1, characterized in that all adjustment means (22-23-24) of each of said LCD-panels (2-3-4) are motorized.

3. LCD-projector according to claim 1 or 2, characterized in that the adjustment means (22-23-24) of one or more of the LCD-panels (2-3-4) comprise, on the one hand, adjustment means (25) for the focal and/or magnification adjustment of the projected image (5) and, on the other hand, adjustment means (26) allowing to adjust the mutual position of the images from the respective LCD-panels (2-3-4) independently from the focal adjustment.

4. LCD-projector according to claim 1 or 2, characterized in that the adjustment means (22-23-24) of one or more of the LCD-panels (2-3-4) comprise first adjustment means (25) allowing to adjust and locate the respective LCD-panel (2-3-4) in a predetermined plane, as well as second adjustment means (26) allowing to displace said LCD-panel (2-3-4) within said plane, independently from the adjustment done by the first adjustment means (25).

5. LCD-projector according to claims 3 and 4, characterized in that the adjustment means (25) for the focal adjustment of the projected image are formed by the first adjustment means and that the adjustment means (26) allowing to adjust the mutual position of the images from the respective LCD-panels (2-3-4) are formed by the second adjustment means.

6. LCD-projector according to claim 4 or 5, characterized in that the first adjustment means (25) comprise a support (27) along which the respective LCD-panel (2-3-4) can be shifted in a plane determined by said support (27), as well as of three adjusting devices (29-30-31) cooperating with said support (27) at, or near, the locations of three corners (32-33-34) of the LCD-panel (2-3-4), said adjusting devices (29-30-31) allowing a displacement of said corners (32-33-34) substantially perpendicular to the plane of the LCD-panel (2-3-4).

7. LCD-projector according to claim 6, characterized in that the adjusting devices (29-30-31) respectively cooperate with locations at the support (27) which correspond to the two upper corners (32-33) and one of the lower corners (34) of the LCD-panel (2-3-4).

8. LCD-projector according to claim 7, characterized in that the adjustment device (31) cooperating with the lower corner (34) is provided with a transmission structure (53) allowing to carry out the adjustment at a location on top of the LCD-panel (2-3-4).

9. LCD-projector according to any one of the claims 4 to 8, characterized in that the second adjustment means (26) substantially comprise three adjusting devices (71-72-73), namely two adjusting devices (71-72) allowing to shift the LCD-panel (2-3-4) at two corners (32-33) substantially in the same direction and a third adjusting device (73) allowing to shift the LCD-panel (2-3-4) in a direction which is, or substantially is, perpendicular to the direction of the movement obtained by the first two adjusting devices (71-72).

10. LCD-projector according to claim 9, characterized in that the said two adjusting devices (71-72) allow to shift up and down the LCD-panel (2-3-4) at its two upper corners (32-33) and in that the said third adjusting device (73) allows to shift the LCD-panel (2-3-4) in a sideward direction.

11. LCD-projector according to any one of the claims 6 to 10, characterized in that the adjusting devices (29-30-31-71-72-73) comprise couplings provided between supporting parts and portions to be adjusted, wherein said couplings are provided with regulation elements (44-45-46-71-72-73) which are variable in length.

12. LCD-projector according to claim 11, characterized in that the regulation elements (44-45-46-71-72-73) comprise endless screws or thread rods (60), these screws or rods (60) being mounted in such manner that the rotation thereof in one rotational direction allows a lengthening, while the rotation thereof in the reverse rotational direction allows a shortening.

13. LCD-projector according to claim 11 or 12, characterized in that the regulation elements (44-45-46) are mounted between the supporting parts and portions to be adjusted by means of joints which allow a rotation in at least one plane and/or universal joints (58-59).

14. LCD-projector according to claim 11, 12 or 13, characterized in that the couplings are provided with biasing means excluding play in the couplings.

15. LCD-projector according to any one of the claims 4 to 14, characterized in that the first adjustment means (25) comprise a support (27) along which the LCD-panel (2-3-4) can be shifted, and in that elastic tensioning means (88) are provided to permanently force the framing (35) of the LCD-panel (2-3-4) in contact with the support (27).

16. LCD-projector according to any one of the preceding claims, characterized in that one or more of the LCD-panels (2-3-4), together with one or more of the corresponding adjustment means (25-26) are formed as a dismountable unit.

17. LCD-projector according to claim 11 or 12, characterized in that one or more of the regulation elements (44-45-46-71-72-73) are driven by means of electric motors (61).

18. LCD-projector according to any one of the preceding claims, characterized in that it is provided with a remote control for adjusting one or more of said adjustment means (25-26).

19. LCD-projector according to any one of the preceding claims, characterized in that the adjustment means (25-26) are automated.

20. LCD-projector according to claim 19, characterized in that the LCD-projector (1) is provided with a camera (81) for observing the image (5) projected by the LCD-projector (1), for example a test image, as well as with means for controlling the adjustment means (25-26) in function of the image (5) observed by the camera (81).

21. LCD-projector according to any one of the claims 3 to 16, characterized in that one, more than one or each of the motorized adjustment means (25-26) are replaced by manually adjustable adjustment means, such as adjustment screws.
